# EUROPEAN PATENT APPLICATION

(11) **EP 3 875 186 A1**
(43) Date of publication of application: **08.09.2021**
(21) Application number: 20217875.2
(22) Date of filing: 30.12.2020
(51) Int. Cl.: B22F 5/10, B22F 10/28, B22F 10/38, B22F 10/68, B33Y 10/00, B33Y 40/00, B33Y 80/00, H05B 6/36, H05B 6/42, H05B 6/44

(54) **MANUFACTURING METHOD FOR INDUCTION HEATING COIL**

(30) Priority: 05.03.2020 JP 2020037881
(71) Applicant: TOYOTA JIDOSHA KABUSHIKI KAISHA, Toyota-shi, Aichi-ken, 471-8571 (JP)
(72) Inventor: YAMAMOTO, Yasuhiro, Toyota-shi, Aichi-ken, 471-8571 (JP)
(74) Representative: Winter, Brandl - Partnerschaft mbB

(57) **Abstract**

A manufacturing method for an induction heating coil includes repeating a sequence of bedding metal powder (51) in a layer and forming a metal layer by applying laser beam (LB) to a predetermined region of the bedded metal powder (51) to be fused and solidified; and building an induction heating coil by sequentially building up the metal layers one vertically above another. The induction heating coil is a cross-sectionally quadrangular pipe and surrounded by a pair of curved surfaces (S1, S3) in a circular arc shape along a circumferential direction of an outer periphery of a circular columnar object to be heated (CP), and a pair of flat surfaces (S2, S4) adjacent to the curved surfaces (S1, S3). The induction heating coil is built such that, of the flat surfaces (S2, S4), a flat surface located vertically above a hollow portion of the pipe makes an angle greater than or equal to a predetermined angle with a horizontal plane.

## Description

### BACKGROUND OF THE INVENTION

### 1. Field of the Invention

The invention relates to a manufacturing method for an induction heating coil and, more particularly, to a manufacturing method for an induction heating coil, in which an induction heating coil is built by repeatedly forming a metal layer obtained by fusing and solidifying metal powder bedded in a layer through application of laser beam to a predetermined region of the metal powder.

### 2. Description of Related Art

In recent years, an additive manufacturing technology (so-called 3D printing technology) has been put in the spotlight. In the additive manufacturing technology, a three-dimensionally shaped article is built by repeatedly fusing and solidifying metal powder bedded in a layer through application of laser beam to a predetermined region of the metal powder and then building up a large number of metal layers. Japanese Unexamined Patent Application Publication No. 2018-010876 (JP 2018-010876 A) describes a technique for manufacturing an induction heating coil by using such an additive manufacturing technology.

### SUMMARY OF THE INVENTION

The inventor found the following inconvenience in terms of a manufacturing method for an induction heating coil, described in JP 2018-010876 A. As shown in FIG. 10(c) of JP 2018-010876 A, when a coil unit 3 is formed by additive manufacturing, a support for supporting a lower end surface 3h needs to be formed inside the coil unit 3. Therefore, at the time of removing metal powder remaining inside the coil unit 3 after building, the support may interfere with removal of metal powder. In addition, the support formed inside the coil unit 3 cannot be removed, so there is such inconvenience that the support interferes with flow of refrigerant, such as coolant, inside the coil unit 3. When no support is formed, metal powder is located vertically below the lower end surface 3h, so the lower end surface 3h sags in under its own weight.

The invention provides a manufacturing method for an induction heating coil, which is capable of additive manufacturing without forming a support inside.

A manufacturing method for an induction heating coil according to an aspect of the invention includes repeating a sequence of bedding metal powder in a layer and forming a metal layer by applying laser beam to a predetermined region of the metal powder bedded in a layer to be fused and solidified; and building an induction heating coil by sequentially building up the metal layers one vertically above another. The induction heating coil is a pipe having a quadrangular shape in cross section and surrounded by a pair of curved surfaces curved in a circular arc shape along a circumferential direction of an outer periphery of a circular columnar object to be heated, and a pair of flat surfaces adjacent to the pair of curved surfaces. The induction heating coil is built such that, of the pair of flat surfaces, the flat surface located vertically above a hollow portion of the pipe makes an angle greater than or equal to a predetermined angle with a horizontal plane. The predetermined angle may be, for example, 45°.

With the manufacturing method according to the aspect of the invention, the induction heating coil is a pipe having a quadrangular shape in cross section and surrounded by a pair of curved surfaces curved in a circular arc shape along a circumferential direction of an outer periphery of a circular columnar object to be heated, and a pair of flat surfaces adjacent to the pair of curved surfaces, and the induction heating coil is built such that, of the pair of flat surfaces, the flat surface located vertically above a hollow portion of the pipe makes an angle greater than or equal to a predetermined angle with a horizontal plane. Therefore, no support for supporting the surface located vertically above needs to be formed inside the pipe.

The induction heating coil may be built such that, of the pair of curved surfaces, the surface facing the object to be heated is located vertically above the hollow portion of the pipe. With such a configuration, the inside of the surface facing the object to be heated becomes rough, so the induction heating coil suitable for heat treatment applications and not causing a plastic deformation of that surface is obtained.

The induction heating coil may be built such that, of the pair of curved surfaces, the surface facing the object to be heated is located vertically below the hollow portion of the pipe. With such a configuration, the inside of the surface facing the object to be heated has no roughness, so the induction heating coil suitable for heat treatment applications and causing a plastic deformation of that surface is obtained.

According to the aspect of the invention, it is possible to provide a manufacturing method for an induction heating coil, which is capable of additive manufacturing without forming a support inside.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic cross-sectional view showing an example of an additive manufacturing apparatus for use in a manufacturing method for an induction heating coil according to a first embodiment;
FIG. 2 is a schematic perspective view showing an induction heating coil manufactured by a manufacturing method for an induction heating coil according to the first embodiment;
FIG. 3 is a schematic cross-sectional view around a crankpin CP inductively heated by a circular arc coil;
FIG. 4 is a macro photograph of an induction heating coil manufactured by the manufacturing method for an induction heating coil according to the first embodiment;
FIG. 5 is an X-ray photograph of a first circular arc portion of a circular arc coil and a first circular arc portion of another circular arc coil in the induction heating coil shown in FIG. 4;
FIG. 6 is an X-ray photograph of a cross section taken along the VI-VI in FIG. 5;
FIG. 7 is a graph showing the energization pattern of the induction heating coil and temperature changes of a curved surface (hot spot) and a curved surface (cold spot) of each first circular arc portion, facing the crankpin;
FIG. 8 is a graph showing the energization pattern of the induction heating coil and temperature changes of a curved surface (hot spot) and a curved surface (cold spot) of each first circular arc portion, facing the crankpin;
FIG. 9 is a macro photograph of an induction heating coil manufactured by a manufacturing method for an induction heating coil according to a second embodiment;
FIG. 10 is an X-ray photograph of a second circular arc portion of a circular arc coil and a second circular arc portion of a circular arc coil in the induction heating coil shown in FIG. 9; and
FIG. 11 is an X-ray photograph of a cross section taken along the XI-XI in FIG. 10.

### DETAILED DESCRIPTION OF EMBODIMENTS

Hereinafter, example embodiments of the invention will be described in detail with reference to the accompanying drawings. However, the invention is not limited to the following embodiments. For clear illustration, the following description and drawings are simplified as needed.

### First Embodiment

### Configuration and Operation of Additive Manufacturing Apparatus

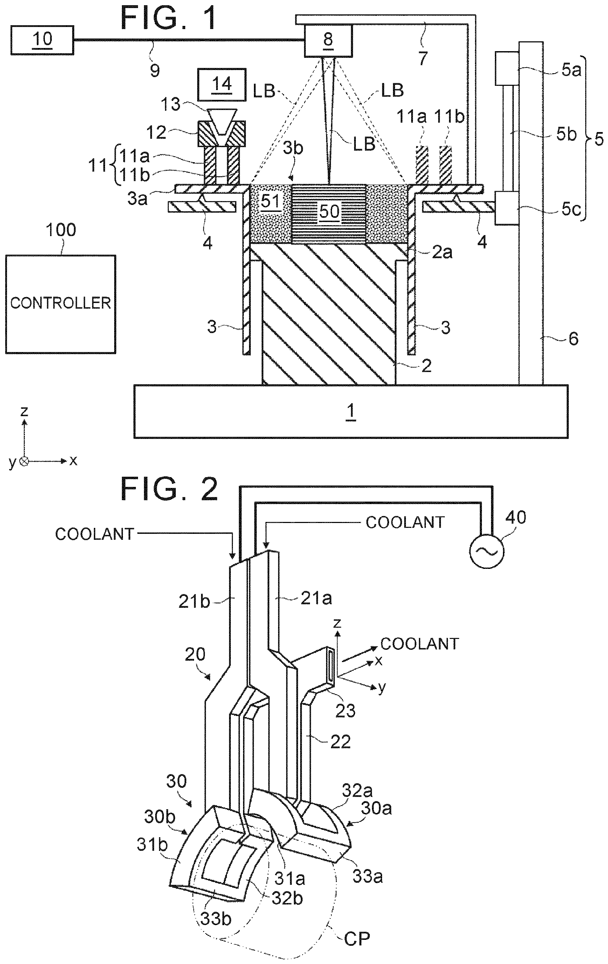

First, an additive manufacturing apparatus for use in a manufacturing method for an induction heating coil according to a first embodiment will be described with reference to FIG. 1. FIG. 1 is a schematic cross-sectional view showing an example of the additive manufacturing apparatus for use in the manufacturing method for an induction heating coil according to the first embodiment. As shown in FIG. 1, the additive manufacturing apparatus includes a base 1, a surface plate 2, a build tank 3, a build tank supporting portion 4, a build tank drive unit 5, a support pole 6, a supporting portion 7, a laser scanner 8, an optical fiber 9, a laser oscillator 10, a squeegee 11, a trough 12, a powder distributer 13, a powder feeding unit 14, and a controller 100. Right-handed x,y,z Cartesian coordinates shown in FIG. 1 are used for the sake of convenience to describe the positional relation among component elements. A z-axis positive direction is a vertically upward direction (building direction), and an x-y plane is a horizontal plane.

The base 1 is a stage for fixing the surface plate 2 and the support pole 6. The base 1 is installed on a floor surface such that a top surface on which the surface plate 2 is placed is horizontal. The surface plate 2 is placed and fixed to the horizontal top surface of the base 1. The top surface of the surface plate 2 is also horizontal. Metal powder 51 is bedded on the top surface of the surface plate 2, and a three-dimensionally shaped built product 50 is formed. An actual built product 50 is an induction heating coil; however, the built product 50 shown in FIG. 1 is schematically drawn to illustrate the additive manufacturing apparatus. The details of the induction heating coil will be described later.

In the example of FIG. 1, the surface plate 2 is a quadrangular prism-shaped member. As shown in FIG. 1, a flanged projecting portion 2a projecting in a horizontal direction is provided all around the periphery of the top surface of the surface plate 2. The overall outer periphery of the projecting portion 2a is in contact with the inner surface of the build tank 3, so the metal powder 51 can be held in the space surrounded by the top surface of the surface plate 2 and the inner surface of the build tank 3. Here, by providing a seal member (not shown) made of, for example, felt on the outer periphery of the projecting portion 2a, which is in contact with the inner surface of the build tank 3, the ability to hold the metal powder 51 is enhanced.

The build tank 3 is a cylindrical member that laterally holds metal powder 51 bedded on the top surface of the surface plate 2. In the example of FIG. 1, the surface plate 2 has a quadrangular prism shape, so the build tank 3 is a square pipe having flanges 3a at the top end. The build tank 3 is made of, for example, a stainless steel sheet having a thickness of about 1 mm to about 6 mm (suitably, about 3 mm to about 5 mm) and is light in weight. A metal powder layer is formed at a top opening end 3b of the build tank 3, and laser beam LB is applied to the metal powder layer, with the result that a metal layer is formed. The top opening end 3b has dimensions of, for example, 600 mm × 600 mm.

The build tank 3 is installed so as to be movable in an up-down direction (z-axis direction). As will be described in detail later, the build tank 3 is moved up by a predetermined amount relative to the surface plate 2 each time a metal layer is formed, thus forming the built product 50. In the additive manufacturing apparatus according to the first embodiment, only the light, constant-weight build tank 3 is moved up. Therefore, a metal powder layer can be formed accurately every time. As a result, the built product 50 can be formed accurately.

The build tank supporting portion 4 is a support member that supports the bottom surfaces of the flanges 3a at three points such that the top surfaces of the flanges 3a of the build tank 3 is horizontal. The build tank supporting portion 4 is coupled to a coupling portion 5c of the build tank drive unit 5 that moves the build tank 3 in the up-down direction (z-axis direction).

The build tank drive unit 5 is a drive mechanism for moving the build tank 3 in the up-down direction (z-axis direction). The build tank drive unit 5 includes a motor 5a, a ball screw 5b, and the coupling portion 5c. When the motor 5a is driven, the ball screw 5b provided so as to extend in the z-axis direction rotates. When the ball screw 5b rotates, the coupling portion 5c moves in the up-down direction (z-axis direction) along the ball screw 5b. As described above, since the build tank supporting portion 4 that supports the build tank 3 is coupled to the coupling portion 5c, the build tank 3 is movable in the up-down direction (z-axis direction) through the build tank drive unit 5. A drive source of the build tank drive unit 5 is not limited to a motor and may be a hydraulic cylinder or the like.

The build tank drive unit 5 is fixed to the upper part of the support pole 6 provided in an upright position substantially vertically (that is, in a vertical direction) from the base 1. In this way, in the additive manufacturing apparatus according to the present embodiment, the build tank drive unit 5 is installed outside the build tank 3, so maintainability is good.

The laser scanner 8 applies laser beam LB to a metal powder layer formed at the top opening end 3b of the build tank 3. The laser scanner 8 includes a lens (not shown) and a mirror (not shown). Therefore, as shown in FIG. 1, the laser scanner 8 is capable of adjusting the focus of laser beam LB on a metal powder layer regardless of a location on a horizontal plane (x-y plane) in the metal powder layer. Laser beam LB is generated in the laser oscillator 10 and is introduced into the laser scanner 8 via the optical fiber 9.

The laser scanner 8 is fixed to one of the flanges 3a of the build tank 3 via the supporting portion 7. For this reason, a constant distance between the laser scanner 8 and a metal powder layer that is an object to which laser beam LB is applied is maintained. Therefore, the additive manufacturing apparatus according to the first embodiment is capable of accurately manufacturing the built product 50.

The squeegee 11 is made up of a first squeegee 11a and a second squeegee 11b. The first squeegee 11a and the second squeegee 11b each are provided so as to extend in a y-axis direction. The squeegee 11 is capable of sliding in an x-axis direction from one of the flanges 3a to the opposed flange 3a via the top opening end 3b of the build tank 3.

As shown in FIG. 1, in a state where the first squeegee 11a and the second squeegee 11b are set on the flange 3a on the negative side in the x-axis direction, metal powder is fed to between the first squeegee 11a and the second squeegee 11b. Here, metal powder for forming a metal powder layer twice is fed. In other words, when the squeegee 11 slides from the flange 3a on the negative side in the x-axis direction to the flange 3a on the positive side in the x-axis direction, a single metal powder layer is formed at the top opening end 3b of the build tank 3.

As represented by the dashed lines in FIG. 1, while laser beam LB is being applied to the metal powder layer to form a metal layer, the squeegee 11 is on standby on the flange 3a on the positive side in the x-axis direction. When the squeegee 11 slides from the flange 3a on the positive side in the x-axis direction to the flange 3a on the negative side in the x-axis direction, another single metal powder layer is formed at the top opening end 3b of the build tank 3.

When, for example, a region for forming a metal layer is narrow, the squeegee 11 may stop sliding on the way while covering the region for forming a metal layer without fully sliding from the flange 3a on the negative side in the x-axis negative side to the flange 3a on the x-axis positive side. A metal powder amount for forming a metal powder layer can be cut down, and time can be reduced.

The trough 12 and the powder distributer 13 are used to uniformly distribute metal powder dropped from the powder feeding unit 14 in the longitudinal direction of the squeegee 11. An opening having a length (y-axis direction) narrower than a space (x-axis direction) between the first squeegee 11a and the second squeegee 11b and substantially equal to a powder charging region of the squeegee 11 is formed on the bottom surface of the trough 12.

The powder distributer 13 is a plate-shaped member having the same shape in cross section as the groove of the trough 12. The powder distributer 13 is capable of slide in the y-axis direction by the drive mechanism (not shown). In FIG. 1, for the sake of easy illustration, the powder distributer 13 is drawn away from the trough 12. However, actually, the powder distributer 13 slides while being in contact with both side surfaces of the groove of the trough 12 without any gap. When the powder distributer 13 slides from one end where metal powder is dropped in the trough 12 to the other end, the metal powder is uniformly distributed in the longitudinal direction (y-axis direction) of the squeegee 11 via the opening of the trough 12. The powder feeding unit 14 is a small-sized tank in which metal powder is contained. The metal powder is, for example, iron powder having a mean particle diameter of about 20 µm.

The controller 100 controls the operation of the additive manufacturing apparatus. For example, the controller 100 is connected by wire or wirelessly to the build tank drive unit 5, the laser scanner 8, the laser oscillator 10, the squeegee 11, and the like. The controller 100 stores three-dimensional data for manufacturing the built product 50 and controls these component elements by using the three-dimensional data. Thus, the additive manufacturing apparatus builds the built product 50.

Although not shown in the drawing, the controller 100 has functions as a computer and includes, for example, a calculation unit, such as a central processing unit (CPU), and a storage unit, such as random access memory (RAM) and read only memory (ROM), in which various control programs, data, and the like are stored. The controller 100 may be divided into multiple controllers.

As described above, in the additive manufacturing apparatus, the three-dimensionally-shaped built product 50 is manufactured by repeating a sequence of forming a metal layer by applying laser beam to a predetermined region of metal powder 51 bedded in a layer to be fused and solidified.

### Configuration of Induction Heating Coil

Next, the configuration of an induction heating coil manufactured by the manufacturing method for an induction heating coil according to the first embodiment will be described with reference to FIG. 2. FIG. 2 is a schematic perspective view showing an induction heating coil manufactured by the manufacturing method for an induction heating coil according to the first embodiment. The induction heating coil corresponds to the built product 50 shown in FIG. 1 and is made of, for example, pure copper or a copper base alloy, such as chromium copper. As shown in FIG. 2, the induction heating coil includes a piping unit 20 and a coil unit 30.

As shown in FIG. 2, the piping unit 20 includes a pair of lead pipes 21a, 21b, a connecting pipe 22, and a drain pipe 23. Each component of the piping unit 20 is made up of a flat rectangular pipe having wide surfaces perpendicular to the y-axis direction (the width in the y-axis direction is small).

The coil unit 30 inductively heats an object to be heated from the outer side. The object to be heated has a circular columnar shape of which the central axis is parallel to the y-axis. An example of the object to be heated, represented by the alternate long and two-short dashed line in FIG. 2, is a crankpin CP of a crankshaft. As shown in FIG. 2, the coil unit 30 includes a pair of circular arc coils 30a, 30b curved in a circular arc shape along the circumferential direction of the outer periphery of the crankpin CP.

In addition, as shown in FIG. 2, the circular arc coil 30a includes a first circular arc portion 31a, a second circular arc portion 32a, and a connecting portion 33a. Similarly, the circular arc coil 30b includes a first circular arc portion 31b, a second circular arc portion 32b, and a connecting portion 33b.

Right-handed x,y,z Cartesian coordinates shown in FIG. 2 are used for the sake of convenience to describe the positional relation among the component elements. A z-axis positive direction is a vertically upward direction (building direction), and an x-y plane is a horizontal plane. The position of the induction heating coil shown in FIG. 2 is not a position in a built state and is a position in a state in use.

As shown in FIG. 2, the lead pipes 21a, 21b are provided so as to extend upward (z-axial direction) and are disposed next to each other in the x-axis direction. The upper ends of the lead pipes 21a, 21b each are connected to a high-frequency power supply 40. On the other hand, the lower end of the lead pipe 21a is connected to the basal portion (upper end portion) of the first circular arc portion 31a of the circular arc coil 30a, and the lower end of the lead pipe 21b is connected to the basal portion (upper end portion) of the first circular arc portion 31b of the circular arc coil 30b.

As shown in FIG. 2, the connecting pipe 22 connects the pair of circular arc coils 30a, 30b. In the example of FIG. 2, the connecting pipe 22 has a U-shape in x-z plane view. Specifically, the connecting pipe 22 has a portion provided so as to extend upward from the basal portion (upper end portion) of the second circular arc portion 32a of the circular arc coil 30a and disposed next to the lead pipe 21a in the y-axis direction. In addition, the connecting pipe 22 also has a portion provided so as to extend upward from the basal portion (upper end portion) of the second circular arc portion 32b of the circular arc coil 30b and disposed next to the lead pipe 21b in the y-axis direction. The upper end portions of both portions disposed next to each other in the x-axis direction are connected by a portion provided so as to extend in the x-axis direction.

One end of the drain pipe 23 is connected to the upper end portion of the connecting pipe 22, and coolant is drained from the other end of the drain pipe 23. Because the other end of the drain pipe 23 is electrically insulated, no current flows through the drain pipe 23.

The first circular arc portion 31a and second circular arc portion 32a of the circular arc coil 30a each are square pipes curved in a substantially quarter circular arc shape along the circumferential direction of the outer periphery of the crankpin CP and are disposed next to each other in the y-axis direction. The distal end portions (lower end portions) of the first circular arc portion 31a and second circular arc portion 32a are connected by the connecting portion 33a provided so as to extend in the axial direction of the crankpin CP (y-axis direction).

Similarly, the first circular arc portion 31b and second circular arc portion 32b of the circular arc coil 30b each are square pipes curved in a substantially quarter circular arc shape along the circumferential direction of the outer periphery of the crankpin CP and are disposed next to each other in the y-axis direction. The distal end portions (lower end portions) of the first circular arc portion 31b and second circular arc portion 32b are connected by the connecting portion 33b provided so as to extend in the axial direction of the crankpin CP (y-axis direction).

The flow of current and coolant in the induction heating coil will be described. In FIG. 2, a current supplied from the high-frequency power supply 40 flows through the lead pipe 21a, the circular arc coil 30a, the connecting pipe 22, the circular arc coil 30b, and the lead pipe 21b in this order or in the reverse order.

In FIG. 2, coolant for cooling the circular arc coil 30a is introduced from the upper end of the lead pipe 21a, passed through the circular arc coil 30a and the connecting pipe 22, and drained from the drain pipe 23. On the other hand, coolant for cooling the circular arc coil 30b is introduced from the upper end of the lead pipe 21b, passed through the circular arc coil 30b and the connecting pipe 22, and drained from the drain pipe 23. Refrigerant that flows inside the induction heating coil is not limited to coolant.

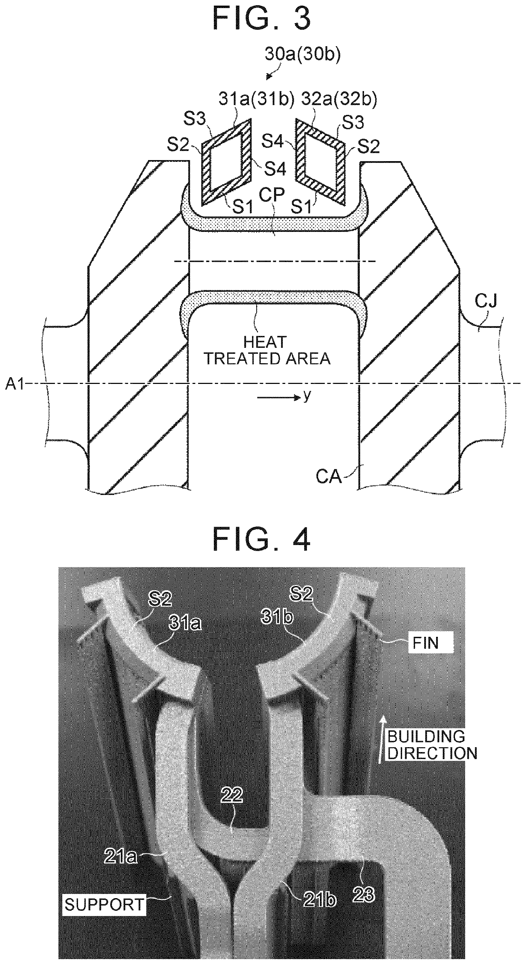

FIG. 3 is a schematic cross-sectional view around the crankpin CP inductively heated by the circular arc coils 30a, 30b. As shown in FIG. 3, the crankpin CP is coupled to a circular columnar crank journal CJ via a crank arm CA. The crankpin CP is subjected to heat treatment with the circular arc coils 30a, 30b while being rotated about its axis.

More specifically, when the crankpin CP is inductively heated, the crankshaft is eccentrically rotated such that the crankpin CP rotates about its axis while the end portion of the crankshaft is held by a robot arm (not shown). As a result, a uniform heat treated area is formed all over the surface of the crankpin CP without rotating the circular arc coils 30a, 30b. Also, as shown in FIG. 3, a heat treated area is formed not only over the crankpin CP but also over the connecting portion of the crank journal CJ with the crankpin CP.

When the crankpin CP is inductively heated, the crankshaft may be rotated about an axis A1 of the crank journal CJ (that is, the axis of the crankshaft). In this case, while the positional relation shown in FIG. 2 is maintained, the circular arc coils 30a, 30b (that is, the entire induction heating coil) just need to be revolved about the axis A1 of the crank journal CJ together with the crankpin CP. Instead of the crankpin CP, the crank journal CJ may be heated with the circular arc coils 30a, 30b. In this case, while the crank journal CJ is rotated about the axis A1, the crank journal CJ is heated.

As shown in FIG. 3, the cross-sectional shape of each of the first circular arc portion 31a and second circular arc portion 32a of the circular arc coil 30a is a parallelogram shape (including a rhombus shape). This also applies to the first circular arc portion 31b and second circular arc portion 32b of the circular arc coil 30b. Since the circular arc coil 30a and the circular arc coil 30b have the same shape, the circular arc coil 30a will be described.

As shown in FIG. 3, in a curved surface S1 of the first circular arc portion 31a, facing the crankpin CP, the distance of a portion from the surface of the crankpin CP reduces as the portion approaches the crank arm CA. As shown in FIG. 2, the curved surface S1 of the first circular arc portion 31a is curved in a circular arc shape along the circumferential direction of the outer periphery of the crankpin CP. A curved surface S3 of the first circular arc portion 31a, facing the curved surface S1, is also curved in a circular arc shape as in the case of the curved surface S1.

A flat surface S2 of the first circular arc portion 31a, facing the crank arm CA, is flat and parallel to the surface of the crank arm CA. A flat surface S4 of the first circular arc portion 31a, facing the flat surface S2, is also flat and parallel to the flat surface S2. In this way, the first circular arc portion 31a is a pipe having a quadrangular shape in cross section and surrounded by the pair of curved surfaces S1, S3 curved in a circular arc shape along the circumferential direction of the outer periphery of the crankpin CP and the pair of flat surfaces S2, S4 adjacent to the pair of curved surfaces S1, S3. The flat surfaces S2, S4 are also parallel to the wide surfaces of the flat rectangular pipes that make up the piping unit 20 (the lead pipes 21a, 21b, the connecting pipe 22, and the drain pipe 23).

Similarly, as shown in FIG. 3, in a curved surface S1 of the second circular arc portion 32a, facing the crankpin CP, the distance of a portion from the surface of the crankpin CP reduces as the portion approaches the crank arm CA. As shown in FIG. 2, the curved surface S1 of the second circular arc portion 32a is curved in a circular arc shape along the circumferential direction of the outer periphery of the crankpin CP. A curved surface S3 of the second circular arc portion 32a, facing the curved surface S1, is also curved in a circular arc shape as in the case of the curved surface S1.

A flat surface S2 of the second circular arc portion 32a, facing the crank arm CA, is flat and parallel to the surface of the crank arm CA. A flat surface S4 of the second circular arc portion 32a, facing the flat surface S2, is also flat and parallel to the flat surface S2. In this way, the second circular arc portion 32a is also a pipe having a quadrangular shape in cross section and surrounded by the pair of curved surfaces S1, S3 curved in a circular arc shape along the circumferential direction of the outer periphery of the crankpin CP and the pair of flat surfaces S2, S4 adjacent to the pair of curved surfaces S1, S3.

The cross-sectional shape of each of the first circular arc portion 31a and second circular arc portion 32a of the circular arc coil 30a may be a rectangular shape (including a square shape). In this case, the distance between the curved surface S1 of each of the first circular arc portion 31a and the second circular arc portion 32a, facing the crankpin CP, and the surface of the crankpin CP is constant. This also applies to the first circular arc portion 31b and second circular arc portion 32b of the circular arc coil 30b. Manufacturing Method for Induction Heating Coil

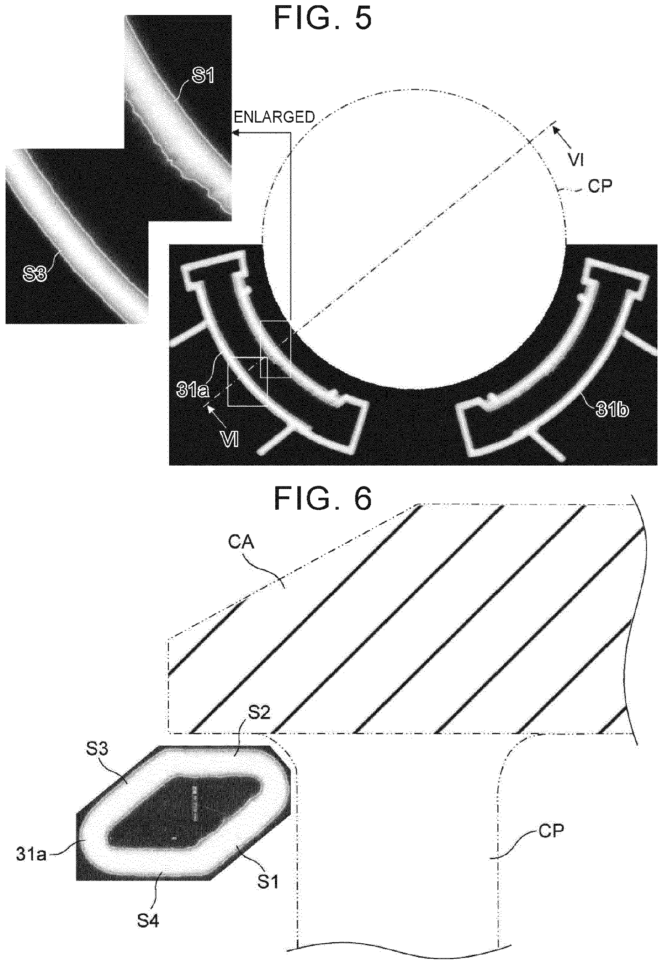

Next, a manufacturing method for an induction heating coil according to the present embodiment will be described with reference to FIG. 4 to FIG. 6. FIG. 4 is a macro photograph of an induction heating coil manufactured by the manufacturing method for an induction heating coil according to the first embodiment. FIG. 5 is an X-ray photograph of the first circular arc portion 31a of the circular arc coil 30a and the first circular arc portion 31b of the circular arc coil 30b in the induction heating coil shown in FIG. 4. FIG. 6 is an X-ray photograph of a cross section taken along the VI-VI in FIG. 5.

As described above, in the manufacturing method for an induction heating coil according to the present embodiment, a sequence of bedding metal powder in a layer and forming a metal layer by applying laser beam to a predetermined region of the metal powder bedded in a layer to be fused and solidified is repeated. With this configuration, an induction heating coil is built by sequentially building up metal layers one vertically above another.

As shown in FIG. 4, the induction heating coil is built together with a support that supports the induction heating coil from the outer side. FIG. 4 shows a building direction. The building direction is a vertically upward direction. The support is removed after building. In the example of FIG. 4, the induction heating coil is built such that the first circular arc portion 31a of the circular arc coil 30a and the first circular arc portion 31b of the circular arc coil 30b are respectively disposed vertically above the second circular arc portion 32a and the second circular arc portion 32b; however, the disposition of the first circular arc portions 31a, 31b and the second circular arc portions 32a, 32b may be inverted.

In the induction heating coil shown in FIG. 4, like reference signs are assigned to portions corresponding to those in the induction heating coil shown in FIG. 3. The configuration and the like of the portions are as described with reference to FIG. 3, so the detailed description is omitted. Fins provided on the outer periphery of each of the circular arc coil 30a and the circular arc coil 30b are used to mount a large number of electrical steel sheets that make up a core. The fins are not shown in FIG. 3.

A case where, as described in JP 2018-010876 A, an induction heating coil is built such that the flat surface S2 of each of the first circular arc portions 31a, 31b, located above the hollow portion, is parallel to the horizontal plane will be discussed. In this case, a support for supporting the flat surface S2 is needed inside each of the first circular arc portions 31a, 31b.

Therefore, when metal powder remaining inside the first circular arc portions 31a, 31b is removed, the support may interfere with removal of the metal powder. In addition, the support formed inside each of the first circular arc portions 31a, 31b cannot be removed, so the support interferes with flow of refrigerant, such as coolant, inside the first circular arc portions 31a, 31b. A support for supporting each flat surface S4 is also needed for the second circular arc portions 32a, 32b, so similar inconvenience occurs.

In the manufacturing method for an induction heating coil according to the present embodiment, the induction heating coil is built such that an angle θ (here, 0° ≤ θ ≤ 90°) that the flat surface S2 of each of the first circular arc portions 31a, 31b, located vertically above the hollow portion, makes with the horizontal plane is greater than or equal to a predetermined angle. For example, 45° < θ. In the example shown in FIG. 4, θ = 45°. With such a configuration, no support for supporting each flat surface S2 is needed inside the first circular arc portions 31a, 31b.

Since the flat surface S4 of each of the second circular arc portions 32a, 32b, located vertically above the hollow portion, is parallel to the flat surface S2 of a corresponding one of the first circular arc portions 31a, 31b, no support for supporting each flat surface S4 is also not required for the second circular arc portions 32a, 32b.

For this reason, in comparison with the case where a support is formed inside the induction heating coil, metal powder is easy to be removed when the metal powder remaining inside the induction heating coil is removed. The flow of coolant inside the induction heating coil also improves. As shown in FIG. 5 and FIG. 6, no support is formed inside the induction heating coil, and metal powder is removed.

As shown in FIG. 4, in the present embodiment, the induction heating coil is built such that the curved surface S1 of each of the first circular arc portions 31a, 31b and second circular arc portions 32a, 32b, facing an object to be heated, shown in FIG. 3 is located vertically above the hollow portion.

In this case, as shown in FIG. 5 and FIG. 6, the inner sides of the curved surfaces S1 of the first circular arc portions 31a, 31b, facing the crankpin CP in use, become rough. This also applies to the curved surfaces S1 of the second circular arc portions 32a, 32b. FIG. 5 shows the crankpin CP by the alternate long and two-short dashed line. FIG. 6 shows the crankpin CP and the crank arm CA by the alternate long and two-short dashed line.

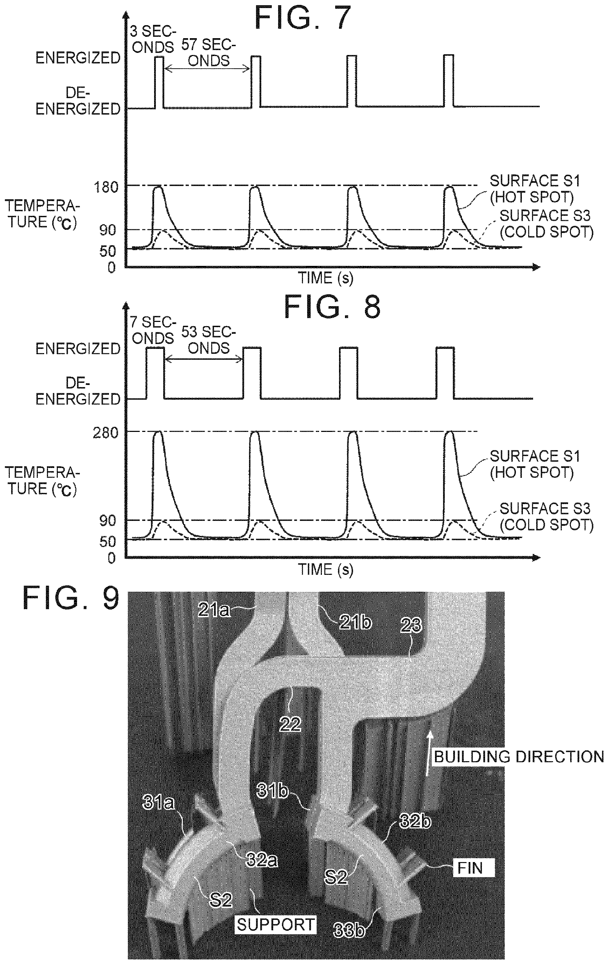

FIG. 7 and FIG. 8 each are graphs showing the energization pattern of the induction heating coil and temperature changes of the curved surface S1 (hot spot) and the curved surface S3 (cold spot) of each of the first circular arc portions 31a, 31b, facing the crankpin CP. The abscissa axis represents time, and the ordinate axis represents temperature and energized/de-energized state. FIG. 7 and FIG. 8 each are schematic graphs showing a heating image, and specific numeric values of time, temperature, and the like in the graphs are only examples.

As shown in FIG. 7 and FIG. 8, when the induction heating coil is energized to heat the crankpin CP, the curved surfaces S1 of the first circular arc portions 31a, 31b (and the second circular arc portions 32a, 32b), facing the crankpin CP, are also heated by radiation heat. Therefore, the curved surfaces S1 of the first circular arc portions 31a, 31b (and the second circular arc portions 32a, 32b) thermally expand, and the curved surfaces S3 are also pulled accordingly. When the induction heating coil is de-energized, the temperature of the curved surfaces S1 decreases. Heating caused by energization and non-heating caused by de-energization are repeated, so the first circular arc portions 31a, 31b (and the second circular arc portions 32a, 32b) get fatigued by heat.

In the example shown in FIG. 7, an energization time every 60 seconds is three seconds and relatively short, so the heating temperature of each curved surface S1 is low at about 180°C, and no plastic deformation occurs in the curved surfaces S1. In contrast, in the example shown in FIG. 8, an energization time every 60 seconds is seven seconds and relatively long, so the heating temperature of the curved surfaces S1 is about 280°C and high, with the result that a plastic deformation occurs in the curved surfaces S1.

When no plastic deformation occurs in the curved surfaces S1 as shown in FIG. 7, thermal fatigue fracture is easier to occur in the curved surfaces S3 (cold spots) than the curved surfaces S1 (hot spots) directly heated. Such fracture is called cold spot fracture. In the case of a tough heating condition that a plastic deformation occurs in the curved surfaces S1 as shown in FIG. 8, thermal fatigue fracture is easy to occur in the curved surfaces S1 (hot spots) directly heated. Such fracture is called hot spot fracture.

In the manufacturing method for an induction heating coil according to the present embodiment, the inner sides of the curved surfaces S1 of the first circular arc portions 31a, 31b (second circular arc portions 32a, 32b), facing the crankpin CP, are rough. For this reason, the induction heating coil according to the present embodiment is difficult to obtain a desired thermal fatigue life in heat treatment applications in which a plastic deformation occurs in the curved surfaces S1 as shown in FIG. 8. On the other hand, a desired thermal fatigue life is easy to be obtained in heat treatment applications in which no plastic deformation occurs in the curved surfaces S1 as shown in FIG. 7. Therefore, the manufacturing method for an induction heating coil according to the present embodiment is suitable as a manufacturing method for an induction heating coil for use in heat treatment applications as shown in FIG. 7.

### Second Embodiment

### Manufacturing Method for Induction Heating Coil

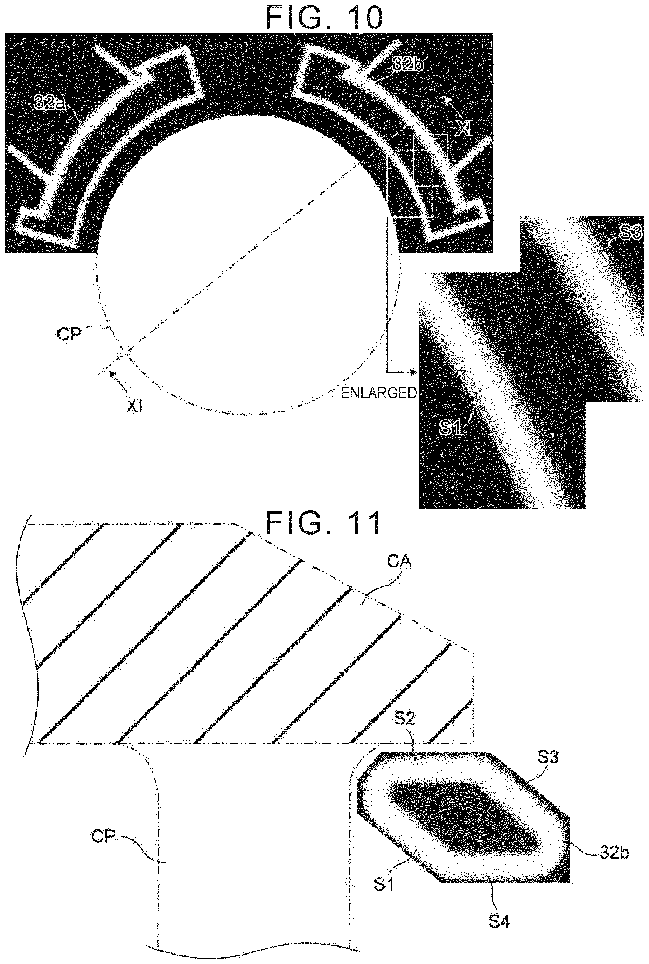

Next, a manufacturing method for an induction heating coil according to a second embodiment will be described with reference to FIG. 9 to FIG. 11. FIG. 9 is a macro photograph of an induction heating coil manufactured by the manufacturing method for an induction heating coil according to the second embodiment. FIG. 10 is an X-ray photograph of the second circular arc portion 32a of the circular arc coil 30a and the second circular arc portion 32b of the circular arc coil 30b in the induction heating coil shown in FIG. 9. FIG. 11 is an X-ray photograph of a cross section taken along the XI-XI in FIG. 10.

In the example of FIG. 9, different from the example of FIG. 4, the induction heating coil is built such that the second circular arc portion 32a of the circular arc coil 30a and the second circular arc portion 32b of the circular arc coil 30b are respectively disposed vertically above the first circular arc portion 31a and the first circular arc portion 31b. The induction heating coil may be built as in the case of the example of FIG. 4. In the induction heating coil shown in FIG. 9 as well, like reference signs are assigned to portions corresponding to those in the induction heating coil shown in FIG. 3. The configuration and the like of the portions are as described with reference to FIG. 3, so the detailed description is omitted.

A case where, as described in JP 2018-010876 A, an induction heating coil is built such that the flat surface S2 of each of the second circular arc portions 32a, 32b, located above the hollow portion, is parallel to the horizontal plane will be discussed. In this case, a support for supporting each flat surface S2 is needed inside the second circular arc portions 32a, 32b.

Therefore, when metal powder remaining inside the second circular arc portions 32a, 32b is removed, the support may interfere with removal of the metal powder. In addition, the support formed inside each of the second circular arc portions 32a, 32b cannot be removed, so the support interferes with flow of refrigerant, such as coolant, inside the second circular arc portions 32a, 32b. A support for supporting each flat surface S4 is also needed for the first circular arc portions 31a, 31b, so similar inconvenience occurs.

In the manufacturing method for an induction heating coil according to the present embodiment, as in the case of the first embodiment, the induction heating coil is built such that an angle θ (here, 0° ≤ θ ≤ 90°) that the flat surface S2 of each of the second circular arc portions 32a, 32b, located vertically above the hollow portion, makes with the horizontal plane is greater than or equal to a predetermined angle. For example, 45° ≤ θ. In the example shown in FIG. 9, θ = 45°. With such a configuration, no support for supporting each flat surface S2 is needed inside the second circular arc portions 32a, 32b.

Since the flat surface S4 of each of the first circular arc portions 31a, 31b, located vertically above the hollow portion, is parallel to the flat surface S2 of a corresponding one of the second circular arc portions 32a, 32b, no support for supporting each flat surface S4 is also not required for the first circular arc portions 31a, 31b.

For this reason, in comparison with the case where a support is formed inside the induction heating coil, metal powder is easy to be removed when the metal powder remaining inside the induction heating coil is removed. The flow of coolant inside the induction heating coil also improves. As shown in FIG. 10 and FIG. 11, no support is formed inside, and metal powder is removed.

As shown in FIG. 9, in the present embodiment, different from the first embodiment, the induction heating coil is built such that the curved surface S1 of each of the first circular arc portions 31a, 31b and second circular arc portions 32a, 32b, facing an object to be heated, shown in FIG. 3 is located vertically below the hollow portion.

In this case, as shown in FIG. 10 and FIG. 11, the curved surfaces S1 of the second circular arc portions 32a, 32b, facing the crankpin CP in use, are not rough, and the inner sides of the curved surfaces S3 facing the curved surfaces S1 become rough. This also applies to the first circular arc portions 31a, 31b. FIG. 10 shows the crankpin CP by the alternate long and two-short dashed line. FIG. 11 shows the crankpin CP and the crank arm CA by the alternate long and two-short dashed line.

In the manufacturing method for an induction heating coil according to the present embodiment, different from the first embodiment, the curved surfaces S1 of the second circular arc portions 32a, 32b (and the first circular arc portions 31a, 31b) are not rough, and the inner sides of the curved surfaces S3 are rough. For this reason, the induction heating coil according to the present embodiment has a shorter thermal fatigue life as compared to that of the first embodiment in heat treatment applications in which no plastic deformation occurs in the curved surfaces S1 as shown in FIG. 7. On the other hand, the induction heating coil according to the present embodiment has a longer thermal fatigue life as compared to that of the first embodiment in heat treatment applications in which a plastic deformation occurs in the curved surfaces S1 as shown in FIG. 8. Therefore, the manufacturing method for an induction heating coil according to the present embodiment is suitable as a manufacturing method for an induction heating coil for use in heat treatment applications as shown in FIG. 8. The other configuration is similar to that of the first embodiment, so the description is omitted.

In the present embodiment, for each of the cases where θ was varied among 45°, 50°, and 55°, the rough inner sides of the curved surfaces S3 were confirmed as in the case of FIG. 10 and FIG. 11.

The invention is not limited to the above-described embodiments and may be modified as needed without departing from the scope of the invention.

## Claims

1. A manufacturing method for an induction heating coil, the manufacturing method comprising:
repeating a sequence of bedding metal powder (51) in a layer and forming a metal layer by applying laser beam (LB) to a predetermined region of the metal powder (51) bedded in a layer to be fused and solidified; and
building an induction heating coil by sequentially building up the metal layers one vertically above another, wherein:
the induction heating coil is a pipe having a quadrangular shape in cross section and surrounded by a pair of curved surfaces (S1, S3) curved in a circular arc shape along a circumferential direction of an outer periphery of a circular columnar object to be heated (CP), and a pair of flat surfaces (S2, S4) adjacent to the pair of curved surfaces (S1, S3); and
the induction heating coil is built such that, of the pair of flat surfaces (S2, S4), a flat surface located vertically above a hollow portion of the pipe makes an angle greater than or equal to a predetermined angle with a horizontal plane.

2. The manufacturing method according to claim 1, wherein, of the pair of curved surfaces (S1, S3), a surface (S1) facing the object to be heated (CP) is located vertically above the hollow portion of the pipe.

3. The manufacturing method according to claim 1, wherein the induction heating coil is built such that, of the pair of curved surfaces (S1, S3), a surface (S1) facing the object to be heated (CP) is located vertically below the hollow portion of the pipe.

4. The manufacturing method according to any one of claims 1 to 3, wherein the predetermined angle is 45°.
